# EUROPÄISCHE PATENTSCHRIFT

(11) **EP 2 887 020 B1**
(45) Veröffentlichungstag und Bekanntmachung des Hinweises auf die Patenterteilung: **22.05.2019**
(21) Anmeldenummer: 14186406.6
(22) Anmeldetag: 25.09.2014
(51) Int. Cl.: G01C 21/34, A63B 69/16, B62M 6/45, B60W 30/16

(54) **Verfahren zum Unterstützen eines gemeinsamen Fahrerlebnisses von Fahrern einer Vielzahl von Mobileinheiten sowie eine entsprechende Mobileinheit**
Method for supporting a shared driving experience of drivers of a plurality of mobile units and a corresponding mobile unit
Procédé de soutien d'une expérience commune de conducteurs d'une pluralité d'unités mobiles et unité mobile correspondante

(30) Priorität: 28.11.2013 DE 102013224342
(43) Veröffentlichungstag der Anmeldung: 24.06.2015
(60) Teilanmeldung: 19163079.7
(73) Patentinhaber: ROBERT BOSCH GMBH, 70442 Stuttgart (DE)
(72) Erfinder: Schroeder, Gernot, 71636 Ludwigsburg (DE); Mazzola, Markus, 70435 Stuttgart (DE); Moeser, Nicolas, 53121 Bonn (DE); Schaaf, Gunther, 70806 Kornwestheim (DE); Haug, Matthias, 71272 Renningen (DE); Schumacher, Jan, 71636 Ludwigsburg (DE)

(56) Entgegenhaltungen:
- US-A1- 2009 181 826
- US-A1- 2010 204 896
- US-A1- 2011 313 647

## Beschreibung

### Stand der Technik

Die vorliegende Erfindung betrifft eine Mobileinheit sowie ein Verfahren zum Unterstützen eines gemeinsamen Fahrerlebnisses von Fahrern einer Vielzahl solcher Mobileinheiten. Insbesondere betrifft die vorliegende Erfindung die Herstellung bzw. die Wahrung eines vordefinierten Zusammenhangs zwischen mindestens zwei Mobileinheiten.

Im Stand der Technik sind sogenannte Pedelecs (E-Bikes, elektrisch antreibbare Fahrräder), die einen Elektromotor zur Unterstützung der Tretleistung besitzen, bekannt. Der Motor kann dabei so geregelt sein, dass er sich der Tretleistung des Fahrers in Abhängigkeit von verschiedenen Parametern und Zustandsgrößen anpasst. Ein Parameter ist der Unterstützungswunsch des Fahrers, welcher sich in mehreren Stufen oder stufenlos aufgrund von Zustandsgrößen wie Geschwindigkeit und Tretleistung regeln lässt. So kann die Unterstützungsleistung proportional zur Tretleistung sein, bis die Geschwindigkeit des Pedelecs eine parametrierte (vordefinierte) Höchstgeschwindigkeit überschreitet. Radsportler und Freizeitradler auf konventionellen Fahrrädern erhalten hingegen keine Unterstützung. Bei gemeinsamem Training oder Ausflügen müssen Fahrer unterschiedlicher Leistungsklassen aufeinander Rücksicht nehmen und können typischerweise weder optimal trainieren noch in für alle angenehmer Ausflugsgeschwindigkeit fahren. Sind einige oder alle Fahrer mit Pedelecs ausgestattet, können sie die Unterstützungswünsche aneinander anpassen, um eine ähnliche Geschwindigkeit bei individueller Tretleistung zu erreichen. Das taktische Ziel, die Gruppe zusammenzuhalten, wird daher bislang durch manuelle Regelung der Leistung erreicht. Mit anderen Worten müssen die Anwender ihre Fahrzeuge bzw. deren Unterstützungsleistung derart justieren, dass die individuelle Tretleistung mit dem vordefinierten räumlichen Zusammenhang der Teilnehmer während der gemeinsamen Fahrt harmoniert.

US 2010/0198453 A1 zeigt ein System und Verfahren, mittels welcher Teilnehmern einer Gruppe von Radsportlern die gegenseitige Hilfe und Rücksichtnahme erleichtert wird. Hierzu werden durch technische Hilfsmittel den Radsportlern Hinweise gegeben, durch welche sie den Zusammenhalt der Gruppe herstellen und bewahren können.

Ebenfalls bekannt sind Ortungssysteme, welche die Position eines Fahrzeugs auf der Erdoberfläche und relativ zu einer Karte bestimmen können. Navigationssysteme erlauben es, in Kombination mit einer Ortung Routenempfehlungen zu geben. Während der Fahrt können die Ortungssysteme Ankunftszeiten schätzen.

Aus der Schrift US 2010/0204896 A1 ist ein Verfahren bekannt, bei dem ein Geschwindigkeitsregler die Differenz zwischen einer Zielgeschwindigkeit und einer aktuellen Geschwindigkeit erfasst. Übersteigt diese Differenz einen Schwellenwert kann der Geschwindigkeitsregler das Fahrzeug auf die Zielgeschwindigkeit bringen, gegebenenfalls in Abhängigkeit von der geographischen Umgebung. Zusätzlich kann der Geschwindigkeitsregler die Geschwindigkeit des Fahrzeugs abbremsen, wenn in Abhängigkeit von der geographischen Umgebung ein nachfolgendes Fahrzeug auf der gleichen Route erfasst wird, dessen Geschwindigkeit gleich hoch oder geringer ist.

Aus der Schrift US 2011/0313647 A1 ist ein Verfahren zur Optimierung des Verbrauchs von Kraftfahrzeugen bekannt, in den eine Abstandsregelung integriert ist. Um eine Kollision mit einem vorausfahrenden Fahrzeug zu verhindern, kann die Abstandsregelung in die Geschwindigkeitsregelung des Fahrzeugs eingreifen.

Es ist eine Aufgabe der vorliegenden Erfindung, Ausfahrten mit zumindest teilweise elektrisch antreibbaren Fortbewegungsmitteln komfortabler zu gestalten.

### Offenbarung der Erfindung

Die vorstehend genannte Aufgabe wird erfindungsgemäß durch ein Verfahren zum Unterstützen eines gemeinsamen Fahrerlebnisses von Fahrern einer Vielzahl von Mobileinheiten gemäß Anspruch 1 gelöst. Dabei wird zunächst eine Referenz für einen räumlichen und zeitlichen Zusammenhang zwischen einer ersten Mobileinheit und einer zweiten Mobileinheit vordefiniert. Beispielsweise können die Position einer ersten Mobileinheit und einer zweiten Mobileinheit relativ zueinander und/oder in Zusammenhang mit einem gemeinsamen Ziel und einer gemeinsamen Ankunftszeit definiert und abgespeichert werden. Während der Fahrt der Mobileinheiten wird nun eine Abweichung des tatsächlichen Zusammenhangs zwischen der ersten Mobileinheit und der zweiten Mobileinheit erkannt. Beispielsweise kann der tatsächliche Zusammenhang ermittelt und mit der vordefinierten Referenz verglichen werden. Im Ansprechen auf einen vordefinierten Schwellenwert, der eine Hysterese umfassen kann, wird anschließend eine elektrische Antriebsleistung einer ersten Mobileinheit oder einer zweiten Mobileinheit der Gruppe automatisch angepasst. Die Antriebsleistung könnte auch als elektromotorische Unterstützungsleistung bezeichnet werden, sofern die Mobileinheiten beispielsweise als Pedelecs ausgestaltet sind. Mit anderen Worten wird darauf hingewirkt, dass die Differenz zwischen dem tatsächlichen Zusammenhang und der vordefinierten Referenz für den Zusammenhang einen vordefinierten Schwellenwert nicht überschreitet. Auf diese Weise werden eine gemeinsame Ausfahrt mittels mehrerer Mobileinheiten und/oder eine zeitgleiche Zielerreichung durch die Mobileinheiten vereinfacht.

Die Unteransprüche zeigen bevorzugte Weiterbildungen der Erfindung.

Die erste Mobileinheit und die zweite Mobileinheit können beispielsweise auf dem Weg zu einer identischen Zielposition sein. Mit anderen Worten können die Anwender einen Zielort für die beiden (zwei oder mehr) Mobileinheiten vorgeben, an welchen sie sich treffen möchten. Damit der Anwender der zuerst eintreffenden Mobileinheit am Zielort nicht auf den Anwender der anderen Mobileinheit warten muss, kann insbesondere vordefiniert werden, dass die Zielposition zeitgleich erreicht werden soll. Sofern die Anwender der ersten und zweiten Mobileinheit eine identische Teilroute oder sogar die gesamte Route gemeinsam unterwegs sind, kann es zudem vorteilhaft sein, dass die Anwender eine Entfernung zueinander einhalten, welche z.B. eine verbale Kommunikation ermöglicht. Der Mindestabstand zur Sicherstellung der Möglichkeit einer verbalen Kommunikation kann daher eine relative Entfernung der ersten Mobileinheit von der zweiten Mobileinheit sein. Die relative Entfernung kann insbesondere entlang einer Trajektorie, eines geplanten oder erwarteten Pfades gemessen werden. Auf diese Weise wird das Gruppenerlebnis bei der Verwendung von Fortbewegungsmitteln ("Mobileinheiten") erhöht.

Das Vordefinieren der Referenz, also eines Sollwertes für den räumlichen und zeitlichen Zusammenhang zwischen den Mobileinheiten kann beispielsweise unter Berücksichtigung einer Anwendereingabe erfolgen. Beispielsweise kann der Anwender einen Maximalabstand von 10 m eingeben, so dass beim Überschreiten des Abstandes von 10 m eine Unterstützungsleistung für die vorausfahrende Mobileinheit reduziert und/oder eine Unterstützungsleistung für die hinterherfahrende Mobileinheit erhöht wird. Alternativ oder zusätzlich kann ein Datensatz bei der Definition der Referenz berücksichtigt werden, welcher Eigenschaften und/oder Betriebszustände der jeweiligen Mobileinheit bzw. einen Trainingsplan und/oder persönliche Vorlieben des Anwenders der jeweiligen Mobileinheit beschreibt. Wird der entsprechende Datensatz während des Vordefinierens der Referenz geladen, können die enthaltenen Informationen zumindest als Anfangswert für eine Unterstützungsleistung einer jeweiligen Antriebseinheit der Mobileinheiten Berücksichtigung finden. Sofern der Datensatz eine Mobileinheit als geländegängig, die andere jedoch als weniger geländegängig identifiziert, können auch unterschiedliche Routen bzw. Teilrouten für die Mobileinheiten vorgesehen werden, so dass beispielsweise ein weniger leistungsfähiger Anwender eine Abkürzung durchs Gelände nehmen kann, während ein leistungsfähigerer Anwender zumindest eine Teilroute der zurückzulegenden Distanz auf einem Umweg fährt. Auf diese Weise kann die Anpassung bzw. Gestaltung der Referenz weitere Parameter berücksichtigen, wodurch die individuellen Möglichkeiten und Vorlieben in die Planung des Fahrerlebnisses Eingang finden.

Die Abweichung des tatsächlichen Zusammenhangs kann beispielsweise unter Verwendung eines Kurzstreckenfunksignals (z.B. WLAN und/oder Bluetooth, etc.) erkannt werden. Alternativ oder zusätzlich können stationär gestützte Kommunikationssignale (z.B. auch unter Vermittlung durch einen geostationären Server) zwischen den Mobileinheiten ausgetauscht werden, um deren relative Position abzugleichen und zu bewerten. Auch die Auswertung der Positionen und Ermittlung der erforderlichen Maßnahmen zur Einhaltung der Referenz kann in einem Server durchgeführt werden. Alternativ oder zusätzlich kann eine satellitengestützte Positionserkennung erfolgen, welche per Kurzstreckenfunksignal und/oder geostationär vermittelte Kommunikation zum Erkennen der Abweichung verwendet wird. Die vorgenannten Ausgestaltungen ermöglichen eine Anpassung der verwendeten Kommunikation in Anbetracht des gewünschten Fahrprofils sowie in Anbetracht der zur Verfügung stehenden Kommunikationsinfrastruktur.

Der vordefinierte Zusammenhang kann beispielsweise in einem maximalen räumlichen Abstand zwischen einer ersten und einer zweiten Mobileinheit bestehen, wenn die Mobileinheiten auf einer gemeinsamen Strecke, beispielsweise auf einer identischen Teilroute unterwegs sind. Auf diese Weise werden die Antriebsleistungen der Mobileinheiten automatisch angepasst, sofern der maximale räumliche Abstand überschritten wird. Dieser Aspekt gilt selbstverständlich auch für eine Gruppe, welche aus mehr als zwei Mobileinheiten besteht. Erfindungsgemäß wird eine der in der Gruppe enthaltenen Mobileinheiten als Referenzposition verwendet, eine mittlere Geschwindigkeit eines Teils der Gruppe von Mobileinheiten definiert und/oder dynamisch eine jeweils im Mittelfeld der Vielzahl von Mobileinheiten befindliche Mobileinheit als Ankerpunkt zur Bestimmung des maximalen räumlichen Abstandes ausgewählt.

Entsprechend wird die Unterstützungsleistung der individuellen Mobileinheiten so angepasst, dass alle Mobileinheiten die Zielposition zeitgleich erreichen und kein Anwender lange auf das Eintreffen weiterer Anwender bzw. Mobileinheiten warten muss.

Die Mobileinheiten sind elektrisch antreibbare Fahrräder, deren Antriebe die Trittleistung ihrer Anwender zumindest unterstützt. Sofern die Mobileinheit beispielsweise über eine automatisierte Schaltung verfügt, kann im Ansprechen auf das Erkennen einer Abweichung zwischen der Referenz und dem tatsächlichem Zusammenhang die Trittfrequenz und/oder die Tretleistung vordefiniert und automatisch angepasst werden. Die Referenz kann beispielsweise auf einem Trainingsplan des Fahrers basieren, auf welchen in Form eines Leistungsprofils über der Zeit in elektronischer Form zugegriffen werden kann. Eine andere Möglichkeit zur Definition des Leistungswunsches ist die Ermittlung der tatsächlich geleisteten Antriebsleistung durch den Anwender. Alternativ oder zusätzlich kann der Fahrer eine Eingabe machen, mittels welcher das Leistungsprofil modifiziert oder aktualisiert wird. Die erfindungsgemäße Anpassung der Antriebsleistung kann nun in Form eines positiven oder negativen Drehmomentes die Differenz zu einem auf der Referenz basierenden Sollwert kompensieren. Allgemein hat es sich bei der Implementierung der vorliegenden Erfindung als vorteilhaft herausgestellt, die Anpassung allmählich einsetzen zu lassen, um die Anwenderakzeptanz zu erhöhen. Auch können kurzfristige Anpassungen längerfristigen Anpassungen überlagert werden, indem z.B. eine der Trittkraft des Anwenders proportionale Unterstützungskraft einer kontinuierlichen Anpassung der Unterstützungsleistung zur Realisierung eines Gruppenzusammenhaltes und/oder einer zeitgleichen Ankunft am Zielort überlagert wird.

Zur Anpassung der Unterstützung an einen Trainingsplan kann überdies beispielsweise ein automatisch schaltbares Getriebe verwendet werden, mittels welchem die Übersetzung zwischen Pedalerie und Antriebsrädern angepasst werden kann. Wird erkannt, dass die Leistung des Fahrers laut Trainingsplan höher als aktuell ermittelt sein soll, wird in einen höheren Gang geschaltet, wodurch der Anwender eine höhere Kraft aufzubringen hat, die im Zusammenspiel mit der aktuellen Trittgeschwindigkeit (Kadenz) die eingestellte Leistung ergibt. Im umgekehrten Fall wird in einen niedrigeren Gang geschaltet, wodurch der Anwender mit der aktuell höheren Trittfrequenz eine verringerte Pedalkraft aufzubringen hat, um die eingestellte Leistung zu halten. Soll hingegen die Trittfrequenz entsprechend eines Trainingsplans gehalten werden, kann zusätzlich elektromotorisch oder generatorisch die Motorleistung angepasst werden. Bei zu niedriger Trittfrequenz wäre die Motorleistung zu erhöhen und/oder in einen niedrigeren Gang zu schalten, bei zu hoher Trittfrequenz wäre die Motorleistung zu verringern und/oder in einen höheren Gang zu schalten. Dabei werden sämtliche insbesondere längerfristigen Anpassungen der Unterstützungsleistung in Abhängigkeit eines aktuellen fahrsituativen Kontextes vorgenommen, so dass die Fahrsicherheit und der Fahrkomfort durch die erfindungsgemäßen Regeleingriffe nicht beeinträchtigt werden. Mit anderen Worten wird stets überprüft, ob eine erfindungsgemäße Anpassung der Antriebsleistung in der aktuellen Fahrsituation der Erwartung des Anwenders entspricht und im Zweifelsfall ausgesetzt. Dabei kann die Anpassung der Antriebsleistung einer Mobileinheit zur Wahrung eines vordefinierten Zusammenhangs mit anderen Mobileinheiten mit anderen Regelungszielen wie einer zur Tretkraft proportionalen Anpassung verbunden sein. Eine Mobileinheit kann insbesondere so konfiguriert sein, dass sie zunächst eine zur Tretkraft proportionale Anpassung der Antriebsleistung einstellt und erst mit einer Latenz die Anpassung zur Wahrung des Zusammenhangs mit anderen Mobileinheiten vornimmt. Diese Latenz könnte insbesondere länger sein, als die typische Latenz der Tretleistungsanpassung eines Fahrers. Weiter könnte die Latenz an das Fahrerverhalten oder die Untergrundbeschaffenheit angepasst werden. An Strecken angepasste Latenzen könnten in einer Karte abgelegt sein und in Abhängigkeit der Position der Mobileinheit auf der Karte konfiguriert sein. Eine Eingabe des Fahrers könnte die Anpassung kurzzeitig ganz unterbrechen, um schwierige Fahrsituationen wie schweres Gelände oder Überholvorgänge zu erleichtern.

Weiter bevorzugt umfasst das erfindungsgemäße Verfahren ein Auswerten eines Ladezustands eines ersten Energiespeichers der ersten Mobileinheit. Wird erkannt, dass der Ladezustand des ersten Energiespeichers zur Erreichung eines vordefinierten Ziels durch die erste Mobileinheit und die zweite Mobileinheit nicht ausreichend ist, kann elektrische Energie von der zweiten Mobileinheit zur ersten Mobileinheit übertragen werden. Auf diese Weise kann verhindert werden, dass aufgrund unterschiedlicher energetischer Reserven das gemeinsame Fahrerlebnis vorzeitig abgebrochen bzw. der vordefinierte Zusammenhang bzw. das gemeinsame Ziel angepasst werden müssen.

Gemäß einem zweiten Aspekt der vorliegenden Erfindung wird eine Mobileinheit gemäß Anspruch 5 vorgeschlagen, welche einen elektrischen (Hilfs-)Antrieb, eine Kommunikationseinheit, eine Positions- und/oder Abstandsermittlungseinheit und eine Verarbeitungseinheit umfasst. Der elektrische Antrieb kann beispielsweise zur Erzeugung eines Unterstützungsmoments für den Vortrieb der Mobileinheit dienen. Die Kommunikationseinheit kann einerseits zur Definition von Referenz und räumlichem/zeitlichem Zusammenhang zwischen den Mobileinheiten verwendet werden. Zusätzlich kann die Kommunikationseinheit über die Position- und/oder Abstandsermittlungseinheit ermittelte Positionen/Abstände der Mobileinheiten senden bzw. empfangen. Die Verarbeitungseinheit umfasst beispielsweise einen Prozessor (z.B. ein Mikro- oder Nanocontroller), wodurch die Mobileinheit eingerichtet ist, als erste Mobileinheit in einem Verfahren eingesetzt zu werden, wie es oben in Verbindung mit dem erstgenannten Erfindungsaspekt eingehend beschrieben worden ist. Die Merkmale, Merkmalskombinationen sowie die sich aus diesen ergebenden Vorteile entsprechen den in Verbindung mit dem erfindungsgemäßen Verfahren ausgeführten derart, dass zur Vermeidung von Wiederholungen auf die obigen Ausführungen verwiesen wird.

Bevorzugt weist die Mobileinheit weiter eine Energiesendeempfangseinheit auf, welche eingerichtet ist, elektrische Energie von einer zweiten Mobileinheit während der Fahrt zu empfangen und/oder elektrische Energie an eine zweite Mobileinheit während der Fahrt zu übertragen. Die Energiesendeempfangseinheit kann beispielsweise drahtgebunden und/oder drahtlos Energie übertragen. Eine drahtlose Übertragung kann beispielsweise induktiv erfolgen. Zur Vermeidung von mechanischen Verbindungen zwischen den Mobileinheiten, welche gewisse Fahrmanöver mitunter über Gebühr behindern würden, kann eine drahtgebundene Übertragung über magnetisch in Position gehaltene Kontakte erfolgen. Entfernen sich die Mobileinheiten über einen durch die drahtgebundene Übertragungsstrecke vordefinierten Abstand hinaus, löst sich die magnetische Verbindung und das Kabel wird automatisch aufgerollt. Auf diese Weise kann eine Verkehrsgefährdung bei der drahtgebundenen Übertragung verringert werden.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung eines ersten möglichen Szenarios zur Anwendung des erfindungsgemäßen Verfahrens;
- Figur 2: eine schematische Darstellung eines alternativen Szenarios zur Anwendung des erfindungsgemäßen Verfahrens;
- Figur 3: eine schematische Darstellung eines Ausführungsbeispiels einer erfindungsgemäßen Mobileinheit; und
- Figur 4: ein Flussdiagramm, veranschaulichend Schritte eines Ausführungsbeispiels eines erfindungsgemäßen Verfahrens.

### Ausführungsformen der Erfindung

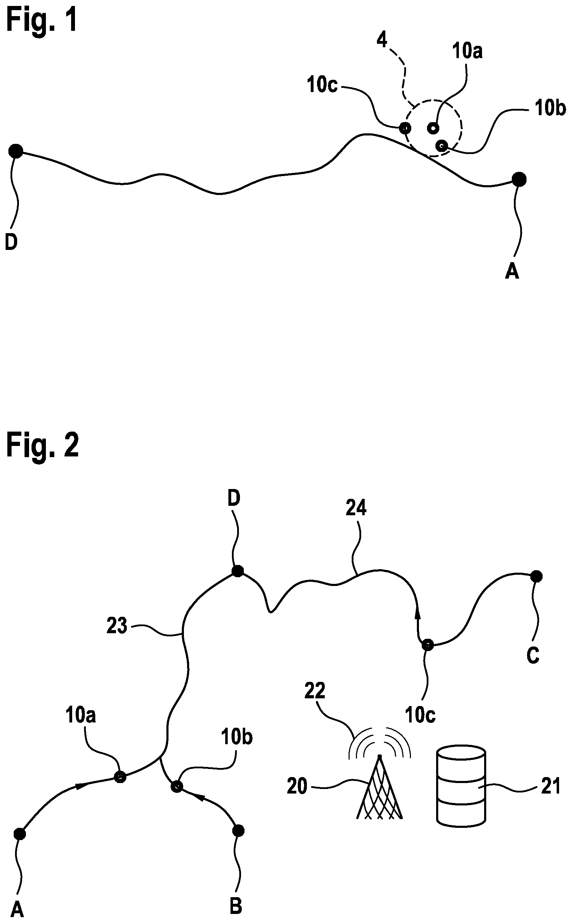

Figur 1 zeigt eine schematische Route, welche von einem Startpunkt A zu einem Zielpunkt D führt. Die Route wird durch drei Mobileinheiten 10a, 10b, 10c befahren. Zumindest eine der Mobileinheiten 10a, 10b ist erfindungsgemäß ausgestaltet. Der vordefinierte räumliche Zusammenhang zwischen der ersten Mobileinheit 10a und der zweiten Mobileinheit 10b ist durch einen gestrichelten Kreis 4 um die erste Mobileinheit 10a schematisch dargestellt. Sofern sich die Mobileinheiten 10b, 10c innerhalb dieser Referenz aufhalten, ist eine Anpassung der Antriebsleitungen nicht erforderlich. Sofern eine der Mobileinheiten 10b, 10c jedoch den gestrichelten Kreis 4 verlassen, wird die Antriebsleistung des abgefallenen Teilnehmers erhöht bzw. die Unterstützungsleistung eines vorausfahrenden Teilnehmers reduziert. Auf diese Weise wird ein gemeinsames Fahrerlebnis begünstigt.

Figur 2 zeigt ein alternatives Szenario für ein gemeinsames Fahrerlebnis mehrerer Fahrer einer Vielzahl von Mobileinheiten 10a, 10b, 10c. Von drei Ausgangspositionen A, B, C starten drei Mobileinheiten 10a, 10b, 10c. Während die erste Mobileinheit 10a und die zweite Mobileinheit 10b eine Teilroute 23 gemeinsam fahren (z.B. ähnlich dem in Verbindung mit Fig. 1 gezeigten Szenario) ist die gesamte Route 24 der dritten Mobileinheit 10c räumlich separat gelegen. Lediglich die Zielposition D ist allen Mobileinheiten 10a, 10b, 10c gemeinsam. Das erfindungsgemäße Verfahren kann nun vorsehen, dass die Antriebsleistung für eine jeweilige Mobileinheit 10a, 10b, 10c für den Fall automatisch angepasst wird, dass eine voraussichtliche Ankunftszeit einer der Mobileinheiten 10a, 10b, 10c an der Zielposition D von einer vereinbarten Ankunftszeit als vordefinierte Referenz abweicht. Zum Erkennen einer solchen Abweichung ist exemplarisch ein Sendeturm 20 sowie ein mit diesem informationstechnisch verbundener Datenspeicher 21 vorgesehen, welche über Drahtlossignale 22 mit den Mobileinheiten 10a, 10b, 10c kommunizieren. Beispielsweise können die Mobileinheiten 10a, 10b, 10c jeweils aktuelle Positionsangaben an den Sendeturm 20 senden, welcher eine Differenz zwischen der aktuellen Position und der zur Herstellung des mittels der Referenz vordefinierten Zusammenhangs erforderlichen Position ermittelt. Korrigierte Sollpositionen können daher über den Sendeturm 20 an die Mobileinheiten 10a, 10b, 10c gesendet werden, im Ansprechen worauf die Mobileinheiten 10a, 10b, 10c die Antriebsleistung anpassen können, um die vordefinierte Ankunftszeit am Zielort D einzuhalten.

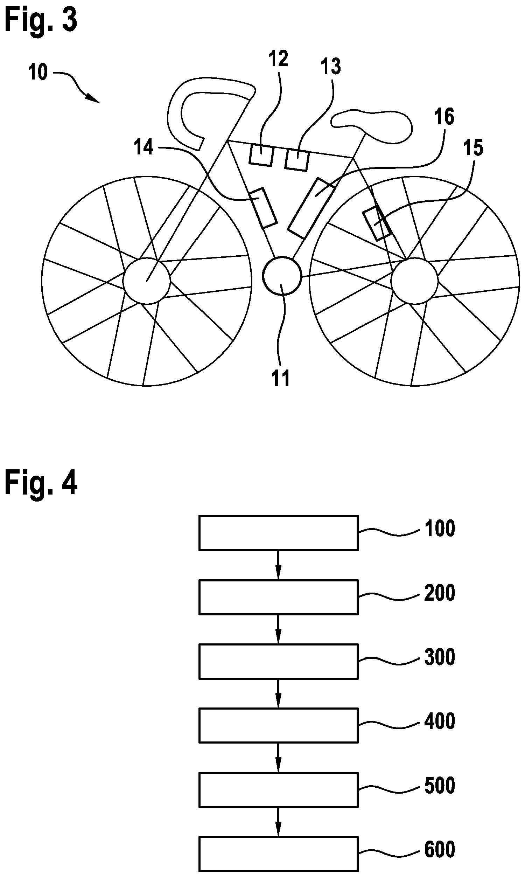

Figur 3 zeigt eine schematische Ansicht einer erfindungsgemäßen Mobileinheit in der Ausführungsform eines Pedelecs 10. Dabei werden ausschließlich die elektrischen bzw. verfahrensrelevanten Komponenten des Pedelecs 10 nachfolgend diskutiert. Im Tretlager ist ein elektrischer Antrieb 11 angeordnet, der unter Vermittlung aus einer Batterie 16 stammender Energie ein Antriebsmoment zur Unterstützung des Anwenders erzeugen kann. Gesteuert wird das Antriebsmoment durch eine Verarbeitungseinheit in Form eines Prozessors 14. Erhält die Kommunikationseinheit Informationen dahingehend, dass übrige Teilnehmer einer Gruppe von Pedelecs 10 um mehr als einen vordefinierten Maximalabstand vorauseilen bzw. nacheilen, passt der Prozessor 14 das Unterstützungsmoment an, um den Abstand zwischen den Pedelecs 10 zu verringern, bzw. auf eine zeitgleiche Zielerreichung hinzuwirken. Dies kann beispielsweise auch das Aufbringen eines negativen Momentes auf das Tretlager umfassen, wodurch mechanische Energie in elektrische Energie gewandelt und innerhalb der Batterie 16 gespeichert wird. Beispielsweise kann auch ein Smartphone bzw. ein persönlicher digitaler Assistent Datensätze zu Anwender und Pedelec 10 speichern und informationstechnisch in das erfindungsgemäße Pedelec 10 eingebunden werden. Im Zuge dessen kann beispielsweise auch ein satellitenbasiertes Ortungssystem innerhalb des mobilen Endgerätes zur Positionsbestimmung des Pedelecs 10 verwendet werden. In ähnlicher Weise kann eine drahtlose Kommunikationseinheit des mobilen Endgerätes als Kommunikationseinheit 12 verwendet werden. Dies ermöglicht einen einfachen Aufbau des Pedelecs 10 und eine gute Integration anwenderbezogener Daten bevorzugter Zielorte, bevorzugter Aufenthaltsorte, etc.

Figur 4 zeigt ein Flussdiagramm, veranschaulichend die Schritte eines Ausführungsbeispiels eines erfindungsgemäßen Verfahrens. Im Schritt 100 wird eine Referenz für einen räumlichen und zeitlichen Zusammenhang zwischen einer ersten Mobileinheit 10a und einer zweiten Mobileinheit 10b vordefiniert. Dies ist ein maximaler Abstand bei der Fahrt mehrerer Mobileinheiten auf einer gemeinsamen (Teil-)Strecke. In Schritt 200 wird anschließend eine Abweichung des tatsächlichen Zusammenhangs zwischen der ersten Mobileinheit 10a und der zweiten Mobileinheit 10b erkannt und in Schritt 300 die elektrische Antriebsleistung einer der Mobileinheiten 10a, 10b oder beider Mobileinheiten 10a, 10b automatisch angepasst. Auf diese Weise wird eine Vergrößerung des Unterschiedes zwischen der vordefinierten Referenz 4 und dem tatsächlichen Zusammenhang zwischen den Mobileinheiten 10a, 10b verhindert bzw. eine Angleichung des tatsächlichen Zusammenhangs bewirkt. In Schritt 400 wird ein Ladezustand eines ersten Energiespeichers 16 der ersten Mobileinheit 10a ausgewertet und dabei in Schritt 500 erkannt, dass der Ladezustand des ersten Energiespeichers 16 zur Erreichung eines gemeinsamen Ziels D durch die erste Mobileinheit 10a und die zweite Mobileinheit 10b nicht ausreichend ist. Diese Erkenntnis kann beispielsweise aus einer vordefinierten Strecke, dem aktuellen Ladezustand des ersten Energiespeichers und einer aktuell bzw. bisher erforderlichen elektrischen Unterstützungsleitung extrapoliert werden. In Schritt 600 wird daher elektrische Energie von der zweiten Mobileinheit 10b zur ersten Mobileinheit 10a übertragen, indem eine induktive Kopplung zwischen zwei Energiesendeempfangseinheiten 15 der Mobileinheiten 10a, 10b vorgenommen wird. Sind die Mobileinheiten 10a, 10b energetisch gekoppelt, kann auch eine aktuelle generatorisch erzeugte Antriebsleistung teilweise von der zweiten Mobileinheit 10b an die erste Mobileinheit 10a (oder umgekehrt) übertragen werden. Auf diese Weise werden Energiespeicher (z.B. Batterien 16) bei der Energieübertragung nicht involviert, so dass die elektrochemischen Verluste bei der Speicherung bzw. beim Freisetzen elektrischer Energie nicht bzw. nur anteilig auftreten.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Verfahren zum Unterstützen eines gemeinsamen Fahrerlebnisses von Fahrern einer Vielzahl von Mobileinheiten (10a, 10b, 10c), wobei die Mobileinheiten (10a, 10b, 10c) elektrisch antreibbare Fahrräder sind, deren Antriebe die Trittleistung ihrer Anwender unterstützen, **gekennzeichnet durch** die Schritte:
- Vordefinieren (100) einer Referenz (4) für einen räumlichen und zeitlichen Zusammenhang zwischen einer ersten Mobileinheit (10a) und einer zweiten Mobileinheit (10b), wobei die Referenz ein maximaler Abstand bei der Fahrt mehrerer Mobileinheiten (10a, 10b, 10c) auf einer gemeinsamen Strecke ist, wobei zur Bestimmung des maximalen Abstands eine in der Gruppe enthaltene Mobileinheit (10a, 10b, 10c) als Referenzposition verwendet wird, eine mittlere Geschwindigkeit eines Teils der Gruppe von Mobileinheiten (10a, 10b, 10c) definiert wird oder dynamisch eine im Mittelfeld der Vielzahl von Mobileinheiten (10a, 10b, 10c) befindliche Mobileinheit ausgewählt wird,
- Erkennen (200) einer Abweichung eines tatsächlichen Zusammenhangs zwischen der ersten Mobileinheit (10a) und der zweiten Mobileinheit (10b) von der Referenz (4), und
- automatisches Anpassen (300) einer elektrischen Antriebsleistung der ersten Mobileinheit (10a) oder der zweiten Mobileinheit (10b), sofern der maximale Abstand überschritten wird.

2. Verfahren nach Anspruch 1, **dadurch gekennzeichnet, dass** die Vielzahl an Mobileinheiten (10a, 10b, 10c) aus mehr als zwei Mobileinheiten besteht.

3. Verfahren nach einem der Ansprüche 1 oder 2, weiter umfassend ein Vordefinieren (100) der Referenz
- unter Berücksichtigung einer Anwendereingabe und/oder
- unter Berücksichtigung eines der ersten Mobileinheit (10a) und/oder dem Anwender der ersten Mobileinheit (10a) zugeordneten Datensatzes.

4. Verfahren nach einem der vorstehenden Ansprüche, wobei das Erkennen (200) der Abweichung des tatsächlichen Zusammenhangs unter Verwendung
- eines Kurzstreckenfunksignals und/oder
- eines servergestützten Kommunikationssignals (22) und/oder
- einer satellitengestützten Positionserkennung erfolgt.

5. Mobileinheit umfassend
- einen elektrischen Antrieb (11), wobei die Mobileinheit ein elektrisch antreibbares Fahrrad ist, dessen Antrieb die Trittleistung ihres Anwenders unterstützt,
- eine Kommunikationseinheit (12),
- eine Positions- und/oder Abstandsermittlungseinheit (13), und
- eine Verarbeitungseinheit (14), **dadurch gekennzeichnet, dass** die Mobileinheit (10) eingerichtet ist, als erste Mobileinheit (10a) in einem Verfahren gemäß einem der vorstehenden Ansprüche eingesetzt zu werden.

## Claims

1. Method for supporting a shared travel experience of riders of a multiplicity of mobile units (10a, 10b, 10c), wherein the mobile units (10a, 10b, 10c) are electrically drivable bicycles, the drives of which assist the pedal power of their users, **characterized by** the steps of:
- predefining (100) a reference (4) for a spatial and temporal relationship between a first mobile unit (10a) and a second mobile unit (10b), wherein the reference is a maximum distance on the journey of multiple mobile units (10a, 10b, 10c) on a shared route, wherein, for the purpose of determining the maximum distance, a mobile unit (10a, 10b, 10c) that the group contains is used as a reference position, an average speed of some of the group of mobile units (10a, 10b, 10c) is defined or a mobile unit that is in the middle of the multiplicity of mobile units (10a, 10b, 10c) is dynamically selected,
- detecting (200) a deviation in an actual relationship between the first mobile unit (10a) and the second mobile unit (10b) from the reference (4), and
- automatically customizing (300) an electrical drive power of the first mobile unit (10a) or of the second mobile unit (10b) if the maximum distance is exceeded.

2. Method according to Claim 1, **characterized in that** the multiplicity of mobile units (10a, 10b, 10c) consists of more than two mobile units.

3. Method according to either of Claims 1 and 2, further comprising predefining (100) the reference
- by taking into consideration a user input and/or
- by taking into consideration a data record associated with the first mobile unit (10a) and/or with the user of the first mobile unit (10a) .

4. Method according to one of the preceding claims, wherein the deviation in the actual relationship is detected (200) by using
- a short-range radio signal and/or
- a server-assisted communication signal (22) and/or
- a satellite-assisted position detection.

5. Mobile unit comprising
- an electric drive (11) wherein the mobile unit is an electrically drivable bicycle, the drive of which assists the pedal power of its user,
- a communication unit (12),
- a position and/or distance ascertainment unit (13), and
- a processing unit (14),
**characterized in that**
the mobile unit (10) is configured to be used as a first mobile unit (10a) in a method according to one of the preceding claims.

## Revendications

1. Procédé pour la prise en charge d'une expérience de conduite commune de conducteurs d'une pluralité d'unités mobiles (10a, 10b, 10c), dans lequel les unités mobiles (10a, 10b, 10c) sont des bicyclettes pouvant être entraînées électriquement dont les entraînements améliorent les performances de pédalage de leurs utilisateurs, **caractérisé par** les étapes suivantes :
- prédéfinir (100) une référence (4) pour une relation spatiale et temporelle entre une première unité mobile (10a) et une seconde unité mobile (10b), dans lequel la référence est une distance maximale pendant le déplacement d'une pluralité d'unités mobiles (10a, 10b, 10c) sur un trajet commun, dans lequel, pour déterminer la distance maximale, une unité mobile (10a, 10b, 10c) comprise dans le groupe est utilisée en tant que position de référence, une vitesse moyenne d'une partie du groupe d'unités mobiles (10a, 10b, 10c) est définie ou une unité mobile située dans la zone centrale de la pluralité d'unités mobiles (10a, 10b, 10c) est sélectionnée de manière dynamique,
- détecter (200) un écart d'une relation réelle entre la première unité mobile (10a) et la seconde unité mobile (10b) par rapport à la référence (4), et
- ajuster automatiquement (300) une puissance d'entraînement électrique de la première unité mobile (10a) ou de la seconde unité mobile (10b) si la distance maximale est dépassée.

2. Procédé selon la revendication 1, **caractérisé en ce que** la pluralité d'unités mobiles (10a, 10b, 10c) est constituée de plus de deux unités mobiles.

3. Procédé selon l'une des revendications 1 ou 2, comprenant en outre une prédéfinition (100) de la référence
- en tenant compte d'une entrée utilisateur et/ou
- en tenant compte d'un enregistrement de données associé à la première unité mobile (10a) et/ou à l'utilisateur de la première unité mobile (10a).

4. Procédé selon l'une des revendications précédentes, dans lequel la détection (200) de l'écart par rapport à la relation réelle est effectuée en utilisant
- un signal radio à courte distance et/ou
- un signal de communication pris en charge par un serveur (22) et/ou
- une détection de position par satellite.

5. Unité mobile, comprenant
- un entraînement électrique (11), dans laquelle l'unité mobile est une bicyclette à entraînement électrique dont l'entraînement améliore les performances de pédalage de l'utilisateur,
- une unité de communication (12),
- une unité de détermination de position et/ou de distance (13), et
- une unité de traitement (14),
**caractérisée en ce que** l'unité mobile (10) est conçue pour être utilisée en tant que première unité mobile (10a) dans un procédé selon l'une des revendications précédentes.
